# EUROPEAN PATENT SPECIFICATION

(11) **EP 2 747 448 B1**
(45) Date of publication and mention of the grant of the patent: **17.08.2016**
(21) Application number: 12782911.7
(22) Date of filing: 13.02.2012
(51) Int. Cl.: H04R 1/10, H04B 1/18, H01Q 1/24

(54) **HEADSET DEVICE, HEADSET, AND METHOD FOR PROCESSING SIGNAL BY HEADSET DEVICE**
HANDAPPARATVORRICHTUNG, HANDAPPARAT UND VERFAHREN ZUR SIGNALVERARBEITUNG MITTELS DER HANDAPPARATVORRICHTUNG
DISPOSITIF DE COMBINÉ, COMBINÉ ET PROCÉDÉ DE TRAITEMENT DU SIGNAL À L'AIDE D'UN DISPOSITIF DE COMBINÉ

(30) Priority: 18.08.2011 CN 201110237552
(43) Date of publication of application: 25.06.2014
(73) Proprietor: ZTE Corporation, Shenzhen, Guangdong 518057 (CN)
(72) Inventor: LI, Chao, Shenzhen, Guangdong 518057 (CN); SUN, Bo, Shenzhen, Guangdong 518057 (CN); ZENG, Xianzheng, Shenzhen, Guangdong 518057 (CN); ZHANG, Xiaofeng, Shenzhen, Guangdong 518057 (CN)
(74) Representative: Studio Torta S.p.A.
(86) International application number: PCT/CN2012/071084
(87) International publication number: WO 2012/152100

(56) References cited:
- EP-A1- 1 659 822
- WO-A2-03/026342
- CN-A- 101 917 201
- CN-A- 102 096 651
- JP-A- 2006 279 746

## Description

### Field

The present invention relates to the field of communication, and in particular to a headset device, a headset, and a method for processing a signal by the headset device.

### Background

With the continuous development of mobile terminal technology, higher demands are proposed on the function and requirement of user's mobile terminal.

Taking a radio terminal receiving broadcast for example, existing mobile phone system has multiple clocks; the speed of the Central Processing Unit (CPU) is at least 100MHz; the reference clock generally is between 12MHz and 30MHz; the frequency multiplication of the reference frequency is easy to reach between 72MHz and 120MHz. Each module of the mobile terminal has a different clock frequency; the mixed frequency generated between each frequency is extremely easy to fall in between 72MHz and 120MHz, enabling the internal signal of the entire mobile terminal to be strong in this frequency range. However, this frequency is just the receiving frequency range of Frequency Modulation (FM). Specifically, the receiving frequency range of FM is between 76.5MHz and 108MHz, thus the signal generated in this frequency range by the system of the mobile terminal is a noise relative to the FM signal.

Most mobile terminals having FM receiving function adopt a headset to serve as the antenna of the FM receiver, and noises of the mobile terminal are easy to couple to the antenna of the FM receiver. Therefore, impedance is increased in a headset circuit to prevent the noises from interfering with the antenna of the FM receiver.

As mobile terminal requires to be thinner and thinner and the screen requires to be bigger and bigger, the real device layout space becomes more and more intense and more and more layout and wiring problems are caused; especially in time division radio systems, Time Division Duplex (TDD) noise problem becomes more and more outstanding; if this problem is not resolved, users would hear interference caused by radio frequency in the headset; therefore, a circuit is added in the headset circuit to suppress the TDD noise.

In many existing designs, a magnetic bead or capacitor is connected to the headset audio signal in series or in parallel to alleviate the TDD noise, and a magnetic bead or capacitor is added in the headset circuit to reduce the noise interference on the FM signal. However, when a mobile terminal needs to reduce both the TDD noise interference and the FM interference, no solution has been proposed so far.

Document EP 1 659 822 discloses an earphone antenna connecting device through which RF and low frequency signals are transmitted together. Document WO 03/026342 discloses a headphone having a lead that functions as an antenna for receiving RF signals.

### Summary

The present invention is to provide a headset device, a headset, and a method for processing a signal by the headset device, to at least solve the above problem.

According to one aspect of the present invention, a headset device is provided, which includes: a first interface, a second interface, a switch and an isolation unit, in which the isolation unit includes a first isolation body and a second isolation body connected to the first isolation body in parallel, and the first interface is connected to the second interface through the isolation unit, wherein the first interface is configured to connect to a ground network of the headset, wherein the ground network is a ground signal of the headset; the second interface is configured to connect to a ground line of a mobile terminal where the headset device is located; the first isolation body is configured to block a signal of a Frequency Modulation (FM) band from coupling to the ground network; the second isolation body is configured to block a signal of a cellular communication frequency band from coupling to the ground network; and the switch is configured to select to conduct the first isolation body, the first interface, and the second interface, or select to conduct the second isolation body, the first interface, and the second interface.

Preferably, the first isolation body and the second isolation body include a magnetic bead.

Preferably, the switch includes: a high-frequency analogue switch or a Complementary Metal Oxide Semiconductor (CMOS) switch.

Preferably, in the FM band an impedance of the first isolation body is greater than or equal to a first threshold, wherein the first threshold is used to ensure the capability of blocking the signal of the FM band from coupling to the ground network; and in the cellular communication frequency band an impedance of the second isolation body is greater than or equal to a second threshold, wherein the second threshold is used to ensure the capability of blocking the signal of the cellular communication frequency band from coupling to the ground network.

Preferably, the FM band is 100MHz, and the first threshold is 600ohm; and the cellular communication frequency band is 1 GHz or 2GHz; and the second threshold is 600ohm.

According to another aspect of the present invention, a headset is provided, which includes the headset device described above.

According to a third aspect of the present invention, a method for processing a signal by the headset device described above is provided, wherein the method is applied to a terminal and includes: receiving a function selection message, wherein the function selection message is used to indicate the selection of FM function or signal processing function of cellular communication frequency band; sending a control command, wherein the control command is used to set the switch to select the first isolation body to block a signal of the FM band from coupling to the ground network or to select the second isolation body to block a signal of the cellular communication frequency band from coupling to the ground network.

Preferably, setting the switch to select the first isolation body to block the signal of the FM band from coupling to the ground network includes: setting the switch to conduct the first isolation body, the first interface and the second interface; and setting the switch to select the second isolation body to block the signal of the cellular communication frequency band coupled to the ground network includes: setting the switch to conduct the second isolation body, the first interface and the second interface.

Preferably, in the FM band an impedance of the first isolation body is greater than or equal to a first threshold, wherein the first threshold is used to ensure the capability of blocking the signal of the FM band from coupling to the ground network; and in the cellular communication frequency band an impedance of the second isolation body is greater than or equal to a second threshold, wherein the second threshold is used to ensure the capability of blocking the signal of the cellular communication frequency band from coupling to the ground network.

Preferably, the FM band is 100MHz; the first threshold is 600ohm; the cellular communication frequency band is 1GHz or 2GHz; and the second threshold is 600ohm.

In the present invention, a first interface, a second interface, a switch and an isolation unit are adopted, in which the isolation unit includes a first isolation body and a second isolation body connected to the first isolation body in parallel, and the first interface is connected to the second interface through the isolation unit, wherein the first interface is configured to connect to a ground network of the headset; the second interface is configured to connect to a ground line of a mobile terminal where the headset device is located; the first isolation body is configured to block a signal of an FM band from coupling to the ground network; the second isolation body is configured to block a signal of a cellular communication frequency band from coupling to the ground network; and the switch is configured to select to conduct the first isolation body, the first interface, and the second interface, or select to conduct the second isolation body, the first interface, and the second interface; thus, the present invention solves the problem that no solution has been proposed when FM interference needs to be reduced while TDD noise problem exists on one mobile terminal, and thus achieves the effect of reducing both FM interference and TDD noise on one mobile terminal and improves the practicability of the mobile terminal.

### Brief Description of the Drawings

Drawings, provided for further understanding of the present invention and forming a part of the specification, are used to explain the present invention together with embodiments of the present invention rather than to limit the present invention, wherein:
Fig. 1 shows a structure diagram of a headset device according to the embodiment of the present invention;
Fig. 2 shows a structure diagram of a headset according to the embodiment of the present invention;
Fig. 3 shows a flowchart of a method for processing a signal by a headset device according to the embodiment of the present invention;
Fig. 4 shows a schematic diagram of the connection method of a headset circuit according to the embodiment of the present invention;
Fig. 5 shows a schematic diagram of the flowing path of FM noise according to the embodiment of the present invention; and
Fig. 6 shows a schematic diagram of the noise flowing path of a mobile communication system according to the embodiment of the present invention.

### Detailed Description of the Embodiments

The preferred embodiments are described in conjunction with the drawings as follows. It shall be understood that the embodiments of the present application and the features of the embodiments can be combined with each other if there is no conflict.

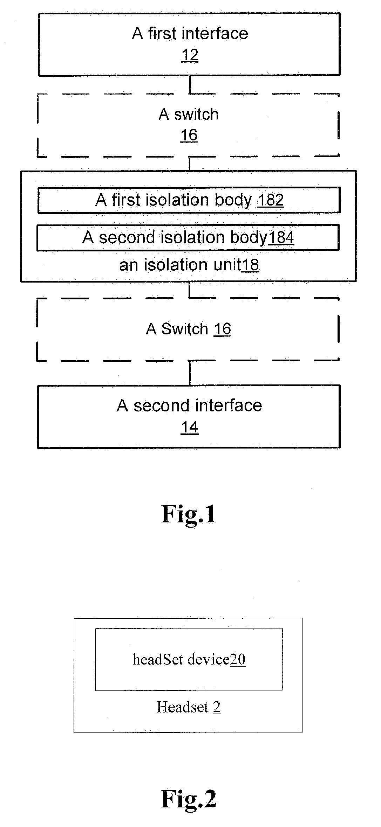

The embodiment provides a headset device. Fig. 1 shows a structure diagram of the headset device according to the embodiment of the present invention, as shown in Fig. 1, the headset device includes: a first interface 12, a second interface 14, a switch 16 and an isolation unit 18, in which the isolation unit 18 includes a first isolation body 182 and a second isolation body 184 connected to the first isolation body 182 in parallel, and the first interface 12 is connected to the second interface 14 through the isolation unit 18. Hereinafter, the structure is described in detail.

The first interface 12 is configured to connect to a ground network of the headset, wherein the ground network is a ground signal of the headset; the second interface 14 is configured to connect to a ground line of a mobile terminal where the headset device is located; the first isolation body 182 is configured to block a signal of an FM range from coupling to the ground network; the second isolation body 184 is configured to block a signal of a cellular communication frequency range from coupling to the ground network; and the switch 16 is configured to select to conduct the first isolation body, the first interface, and the second interface, or select to conduct the second isolation body, the first interface, and the second interface.

With the above structure, by conducting the first isolation body, the first interface and the second interface using the switch, the first isolation body can block the signal of the FM range from coupling to the network, thus FM interference is avoided; or, by conducting the second isolation body, the first interface and the second interface using the switch, the second isolation body can block the signal of the cellular communication frequency range from coupling to the ground network, thus the interference from the cellular communication frequency range is reduced; therefore, the problem that no solution has been proposed when both FM interference and cellular communication frequency range interference need to be reduced is solved, that is, both FM interference and cellular communication frequency range interference can be reduced, and user experience is improved.

In a preferred embodiment, the first isolation body and the second isolation body include a magnetic bead. Through this preferred embodiment, signal can be isolated effectively.

During implementation, the switch adopts many modes, only if it can realize the selection function; preferably, a high-frequency analogue switch or a CMOS switch can be adopted. The two switches can reduce the signal interference generated during selection.

In another preferred implementation, in the FM range an impedance of the first isolation body is greater than or equal to a first threshold, wherein the first threshold is used to ensure the capability of blocking the signal of the FM range from coupling to the ground network; and in the cellular communication frequency range an impedance of the second isolation body is greater than or equal to a second threshold, wherein the second threshold is used to ensure the capability of blocking the signal of the cellular communication frequency range from coupling to the ground network. Through this preferred embodiment, the impedance ranges of the isolation bodies are determined, which is beneficial to accurately block the signal of the FM range coupled to the ground network and block the signal of the cellular communication frequency range coupled to the ground network. Preferably, the FM range is 100MHz, the first threshold is 600ohm, the cellular communication frequency range is 1 GHz or 2GHz, and the second threshold is 600ohm.

The embodiment provides a headset. Fig. 2 shows a structure diagram of the headset according to the embodiment of the present invention, as shown in Fig. 2, the headset 2 includes a headset device 20 described in the above embodiment. The structure of the headset device 20 is as shown in Fig. 1, and no further description is needed here.

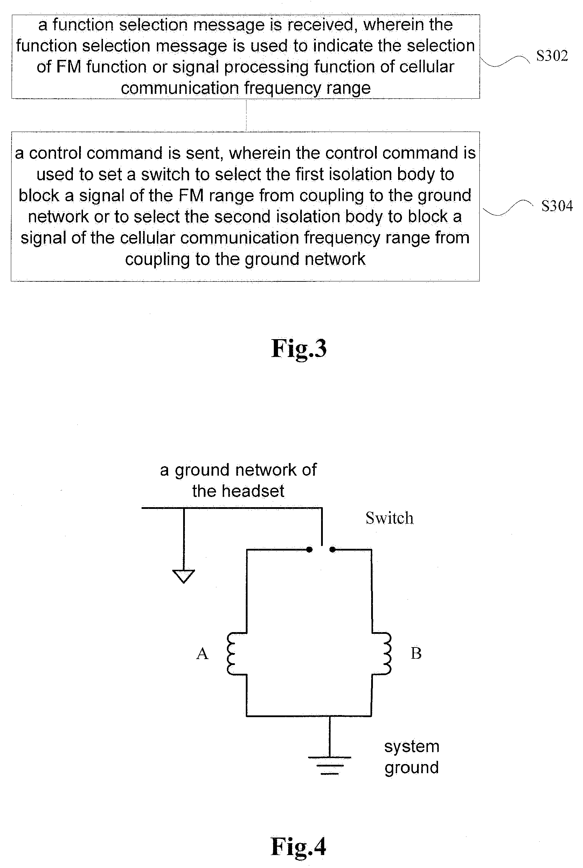

The embodiment provides a method for processing a signal by a headset device. Fig. 3 shows a flowchart of the method for processing a signal by a headset device according to the embodiment of the present invention, wherein the method includes Step 302 to Step 304 as follows.

Step 302: a function selection message is received, wherein the function selection message is used to indicate the selection of FM function or signal processing function of cellular communication frequency range.

Step 304: a control command is sent, wherein the control command is used to set a switch to select the first isolation body to block a signal of the FM range from coupling to the ground network or to select the second isolation body to block a signal of the cellular communication frequency range from coupling to the ground network.

Through the above steps, the function selection message which is used to indicate the selection of FM function or signal processing function of cellular communication frequency range is received, and then the control command, which is used to set the switch to select the first isolation body to block a signal of the FM range from coupling to the ground network or to select the second isolation body to block a signal of the cellular communication frequency range from coupling to the ground network, is sent. Therefore, the problem that no solution has been proposed when both FM interference and cellular communication frequency range interference need to be reduced is solved, that is, both FM interference and cellular communication frequency range interference can be reduced, and user experience is improved.

In a preferred implementation, setting the switch to select the first isolation body to block a signal of the FM range from coupling to the ground network in Step 302 includes: setting the switch to conduct the first isolation body, the first interface and the second interface; setting the switch to select the second isolation body to block a signal of the cellular communication frequency range from coupling to the network ground includes: setting the switch to conduct the second isolation body, the first interface and the second interface. In this preferred implementation, the selection function of the switch is realized through the conduction of the first isolation body, the first interface and the second interface or the conduction of the second isolation body, the first interface and the second interface, thus the complexity of the system is reduced.

Preferably, in the FM range an impedance of the first isolation body is greater than or equal to a first threshold, wherein the first threshold is used to ensure the capability of blocking the signal of the FM range from coupling to the ground network; in the cellular communication frequency range an impedance of the second isolation body is greater than or equal to a second threshold, wherein the second threshold is used to ensure the capability of blocking the signal of the cellular communication frequency range from coupling to the ground network.

Preferably, the FM range is 100MHz; the first threshold is 600ohm; the cellular communication frequency range is 1GHz or 2GHz; and the second threshold is 600ohm.

The present invention is described below in conjunction with preferred embodiments. The following preferred embodiment combines the above embodiment and the preferred implementation.

### Preferred embodiment 1

This embodiment provides a method for receiving an FM signal and preventing a TDD noise by a headset, which includes Step 402 to Step 406 as follows.

Step 402: a device A having high impedance for frequency in the FM range is added in the ground network of the headset, to prevent the ground network of a terminal from coupling the noise caused by the frequency in the FM range to the ground network of the headset, wherein the ground network of the headset serves as a signal receiving network of a radio.

Step 404: a device B having high impedance for cellular communication frequency is added in the ground network of the headset, to prevent the ground network of the terminal from coupling the noise caused by the cellular communication frequency to the ground network of the headset.

Step 406: a switch between A, B devices and the ground network of the headset is added, and enabling the switch to have a selection function, that is, when the terminal selects the FM function, the circuit selects to pass through the device A; when the terminal is in the state of normal radio communication, the circuit selects to pass through the device B.

Through the above steps, the internal FM range signal of the mobile terminal is prevented from transmitting to the FM receiver, the reception strength of useful FM range signal is improved, and the TDD noise generated during the communication of the mobile terminal is prevented from coupling to the headset channel from the system.

### Preferred embodiment 2

This embodiment provides a headset circuit, which is implemented through Step 502 to Step 508 as follows.

Step 502: a high-frequency analogue switch or a CMOS switch is added in the ground network of the headset, and enabling the switch to have a one-out-of-two function, wherein the ground of the headset serves as the receiving antenna of a radio.

Step 504: a magnetic bead is connected to one of two paths of the switch in series, wherein the magnetic bead has high impedance in the cellular communication frequency, that is, the magnetic bead has an impedance of 600ohm or higher in the cellular communication frequency such as 1 GHz or 2GHz.

Step 506: a magnetic bead is connected to the other path of the switch in series, wherein the magnetic bead has high impedance in the FM frequency, that is, the magnetic bead has an impedance of 600ohm or higher in the FM frequency which is 100MHz.

Step 508: the magnetic beads connected to the two paths in series are connected to the ground network of the terminal system together.

The circuit implemented through the above steps can solve the problem of coexistence of TDD noise and radio signal, with simple structure and low cost.

### Preferred embodiment 3

This embodiment provides a headset circuit Fig. 4 shows a schematic diagram of the connection method of the headset circuit according to the embodiment of the present invention; as shown in Fig. 4, the ground network of the headset refers to the ground network in the headset signal; the ground network of the headset has two ends of signals, wherein one end is connected to the ground signal of the headset accessory, while the other end is connected to the ground in the audio circuit near the headset circuit; the ground network of the headset serves as the signal reception network of the FM receiver. The system ground network refers to the ground plane of the entire mobile phone system, wherein the entire ground plane carries the noise generated by each part in the mobile phone, including the noise of the FM range (100MHz) and the noise of radio communication system frequency range (near 1 GHz or 2GHz). The device A refers to a device having high impedance in the FM range, for example, a magnetic bead, which has an impedance of 600ohm in over 100MHz frequency and helps block the FM range noise of the ground network of the entire terminal from entering the ground network of the headset and improve the signal-to-noise ratio of the FM signal receiver, thereby improving the FM receiving performance. The device B refers to a device having high impedance in the radio system transmit frequency range, for example, a magnetic bead, which has an impedance of 600ohm in 1 GHz frequency and helps block high-frequency noises on the ground of the radio system from coupling to the ground network of the headset during the working process of the radio system, thereby avoiding impacting the sound quality of the headset. The switch device refers to a single-pole double-throw switch device, which has a plat frequency response characteristic between 100MHz and 2GHz.

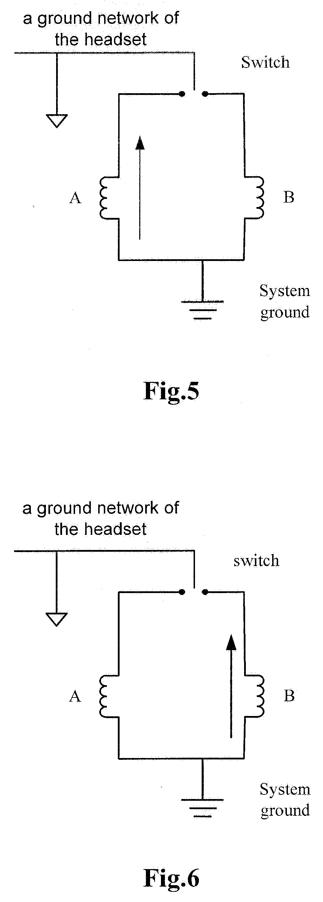

Fig. 5 shows a schematic diagram of the flowing path of FM noise according to the embodiment of the present invention; as shown in Fig. 5, when the FM works, the path through which a signal is coupled to the ground plane of the headset from the ground plane of the entire terminal passes through the device A; however, the device A has high impedance in the FM range and thus isolates the noise of the FM range.

Fig. 6 shows a schematic diagram of the noise flowing path of a mobile communication system according to the embodiment of the present invention; as shown in Fig. 6, when the radio communication system works, the path through which a signal is coupled to the ground plane of the headset from the ground plane of the entire terminal passes through the device B; however, the device B has high impedance in the working frequency range of the radio communication system and thus isolates the noise of the radio communication system frequency range, thereby avoiding the noise of the radio communication frequency range from coupling to the headset signal.

Through the above embodiment, a headset device, a headset and a method for processing a signal by the headset device are provided; by conducting the first isolation body, the first interface and the second interface using the switch, the first isolation body can block the signal of the FM range coupled to the network, thus FM interference is avoided; or, by conducting the second isolation body, the first interface and the second interface using the switch, the second isolation body can block the signal of the cellular communication frequency range coupled to the ground network, thus the interference from the cellular communication frequency range is reduced. Through the above technical scheme, the internal FM range signal of the mobile terminal is prevented from transmitting to the FM receiving path, and in another application scene the internal radio communication system frequency noise of the terminal system is prevented from transmitting to the headset path; therefore, FM receiving signal-to-noise ratio is effectively improved and the headset would not receive interference during a call. It should be noted that not all implementations above can achieve these technical effects and some technical effects can be achieved by some preferred implementations only.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

## Claims

1. A headset device (20), **characterized by** comprising: a first interface (12), a second interface (14), a switch (16) and an isolation unit (18), wherein the isolation unit (18) comprises a first isolation body (182) and a second isolation body (184) connected to the first isolation body (182) in parallel, and the first interface (12) is connected to the second interface (14) through the isolation unit (18), wherein
the first interface (12) is configured to connect to a ground network of the headset;
the second interface (14) is configured to connect to a ground line of a mobile terminal where the headset device is located;
the first isolation body (182) is configured to block a signal of a Frequency Modulation, FM, range from coupling to the ground network;
the second isolation body (184) is configured to block a signal of a cellular communication frequency range from coupling to the ground network; and
the switch (16) is configured to select to conduct the first isolation body (182), the first interface (12), and the second interface (14), or select to conduct the second isolation body (184), the first interface (12), and the second interface (14).

2. The headset device according to claim 1, **characterized in that** the first isolation body (182) and the second isolation body (184) comprise a magnetic bead.

3. The headset device according to claim 1, **characterized in that** the switch (16) comprises a high-frequency analogue switch or a Complementary Metal Oxide Semiconductor, CMOS, switch.

4. The headset device according to any one of claims 1 to 3, **characterized in that** an impedance of the first isolation body (182) in the FM range is greater than or equal to a first threshold, wherein the first threshold is used to ensure the capability of blocking the signal of the FM range from coupling to the ground network; and an impedance of the second isolation body (184) in the cellular communication frequency range is greater than or equal to a second threshold, wherein the second threshold is used to ensure the capability of blocking the signal of the cellular communication frequency range from coupling to the ground network.

5. The headset device according to claim 4, **characterized in that** the FM range is 100MHz, and the first threshold is 600ohm; and the cellular communication frequency range is 1 GHz or 2GHz, and the second threshold is 600ohm.

6. A headset (2), **characterized by** comprising the headset device (20) as claimed in any one of claims 1 to 5.

7. A method for processing a signal by the headset device (20) as claimed in any one of claims 1 to 5, which is applied to a mobile terminal, **characterized by** comprising:
receiving (302) a function selection message, wherein the function selection message is used to indicate the selection of FM function or signal processing function of cellular communication frequency range; and
sending (304) a control command, wherein the control command is used to set a switch to select the first isolation body to block a signal of the FM range from coupling to the ground network or to select the second isolation body to block a signal of the cellular communication frequency range from coupling to the ground network.

8. The method according to claim 7, **characterized in that**
Setting (302) the switch to select the first isolation body to block the signal of the FM range from coupling to the ground network comprises: setting the switch to conduct the first isolation body, the first interface and the second interface; and
Setting (302) the switch to select the second isolation body to block the signal of the cellular communication frequency range from coupling to the ground network comprises: setting the switch to conduct the second isolation body, the first interface and the second interface.

9. The method according to claim 7 or 8, **characterized in that** an impedance of the first isolation body in the FM range is greater than or equal to a first threshold, wherein the first threshold is used to ensure the capability of blocking the signal of the FM range from coupling to the ground network; and an impedance of the second isolation body in the cellular communication frequency range is greater than or equal to a second threshold, wherein the second threshold is used to ensure the capability of blocking the signal of the cellular communication frequency range from coupling to the ground network.

10. The method according to claim 9, **characterized in that** the FM range is 100MHz; the first threshold is 600ohm; the cellular communication frequency range is 1 GHz or 2GHz; and the second threshold is 600ohm.

## Patentansprüche

1. Headset-Vorrichtung (20), **dadurch gekennzeichnet, dass** sie umfasst: eine erste Schnittstelle (12), eine zweite Schnittstelle (14), einen Schalter (16) und eine Isoliereinheit (18), wobei die Isoliereinheit (18) einen ersten Isolierkörper (182) und einen zweiten Isolierkörper (184) enthält, welcher mit dem ersten Isolierkörper (182) parallel geschaltet ist, und die erste Schnittstelle (12) über die Isoliereinheit (18) mit der zweiten Schnittstelle (14) verbunden ist, wobei
die erste Schnittstelle (12) für eine Verbindung mit dem Bodennetzwerk des Headsets konfiguriert ist;
die zweite Schnittstelle (14) für eine Verbindung mit einer Bodenleitung eines mobilen Endgeräts, an dem die Headset-Vorrichtung angeordnet ist, konfiguriert ist;
der erste Isolierkörper (182) dafür konfiguriert ist, ein Signal eines Frequenzmodulations(FM)-Bereichs am Koppeln mit dem Bodennetzwerk zu hindern;
der zweite Isolierkörper (184) dafür konfiguriert ist, ein Signal eines Mobilkommunikations-Frequenzbereichs am Koppeln mit dem Bodennetzwerk zu hindern; und
der Schalter (16) dafür konfiguriert ist, das Betreiben des ersten Isolierkörpers (182), der ersten Schnittstelle (12) und der zweiten Schnittstelle (14) zu wählen oder das Betreiben des zweiten Isolierkörpers (184), der ersten Schnittstelle (12) und der zweiten Schnittstelle (14) zu wählen.

2. Headset-Vorrichtung nach Anspruch 1, **dadurch gekennzeichnet, dass** der erste Isolierkörper (182) und der zweite Isolierkörper (184) einen Magnetwulst umfassen.

3. Headset-Vorrichtung nach Anspruch 1, **dadurch gekennzeichnet, dass** der Schalter (16) einen Hochfrequenz-Analogschalter oder einen CMOS-Schalter umfasst.

4. Headset-Vorrichtung nach einem der Ansprüche 1 bis 3, **dadurch gekennzeichnet, dass** eine Impedanz des ersten Isolierkörpers (182) in dem FM-Bereich größer als ein oder gleich einem ersten Schwellenwert ist, wobei der erste Schwellenwert verwendet wird, um die Fähigkeit zu gewährleisten, das Signal des FM-Bereichs am Koppeln mit dem Bodennetzwerk zu hindern; und dass eine Impedanz des zweiten Isolierkörpers (184) in dem Mobilkommunikations-Frequenzbereich größer als ein oder gleich einem zweiten Schwellenwert ist, wobei der zweite Schwellenwert verwendet wird, um die Fähigkeit zu gewährleisten, das Signal des Mobilkommunikations-Frequenzbereichs am Koppeln mit dem Bodennetzwerk zu hindern.

5. Headset-Vorrichtung nach Anspruch 4, **dadurch gekennzeichnet, dass** der FM-Bereich 100 MHz ist und der erste Schwellenwert 600 Ohm ist; und dass der Mobilkommunikations-Frequenzbereich 1 GHz oder 2 GHz ist und der zweite Schwellenwert 600 Ohm ist.

6. Headset (2), **dadurch gekennzeichnet, dass** es die Headset-Vorrichtung (20) nach einem der Ansprüche 1 bis 5 enthält.

7. Verfahren zum Verarbeiten eines Signals durch die Headset-Vorrichtung (20) nach einem der Ansprüche 1 bis 5, welche bei einem mobilen Endgerät angewendet wird, **dadurch gekennzeichnet, dass** es umfasst:
Empfangen (302) einer Funktionswahlnachricht, wobei die Funktionswahlnachricht dazu verwendet wird, die Wahl der FM-Funktion oder der Signalverarbeitungsfunktion des Mobilkommunikations-Frequenzbereichs anzuzeigen; und
Senden (304) eines Steuerbefehls, wobei der Steuerbefehl dazu verwendet wird, einen Schalter einzustellen, um den ersten Isolierkörper zu wählen, um ein Signal des FM-Bereichs am Koppeln mit dem Bodennetzwerk zu hindern, oder um den zweiten Isolierkörper zu wählen, um ein Signal des Mobilkommunikations-Frequenzbereichs am Koppeln mit dem Bodennetzwerk zu hindern.

8. Verfahren nach Anspruch 7, **dadurch gekennzeichnet, dass**
das Einstellen (302) des Schalters, um den ersten Isolierkörper zu wählen, um ein Signal des FM-Bereichs am Koppeln mit dem Bodennetzwerk zu hindern, umfasst: Einstellen des Schalters zum Betreiben des ersten Isolierkörpers, der ersten Schnittstelle und der zweiten Schnittstelle; und
das Einstellen (302) des Schalters, um den zweiten Isolierkörper zu wählen, um ein Signal des Mobilkommunikations-Frequenzbereichs am Koppeln mit dem Bodennetzwerk zu hindern, umfasst: Einstellen des Schalters zum Betreiben des zweiten Isolierkörpers, der ersten Schnittstelle und der zweiten Schnittstelle.

9. Verfahren nach Anspruch 7 oder 8, **dadurch gekennzeichnet, dass** eine Impedanz des ersten Isolierkörpers (182) in dem FM-Bereich größer als ein oder gleich einem ersten Schwellenwert ist, wobei der erste Schwellenwert verwendet wird, um die Fähigkeit zu gewährleisten, das Signal des FM-Bereichs am Koppeln mit dem Bodennetzwerk zu hindern; und dass eine Impedanz des zweiten Isolierkörpers (184) in dem Mobilkommunikations-Frequenzbereich größer als ein oder gleich einem zweiten Schwellenwert ist, wobei der zweite Schwellenwert verwendet wird, um die Fähigkeit zu gewährleisten, das Signal des Mobilkommunikations-Frequenzbereichs am Koppeln mit dem Bodennetzwerk zu hindern.

10. Verfahren nach Anspruch 9, **dadurch gekennzeichnet, dass** der FM-Bereich 100 MHz ist; und der erste Schwellenwert 600 Ohm ist; und dass der Mobilkommunikations-Frequenzbereich 1 GHz oder 2 GHz ist; und der zweite Schwellenwert 600 Ohm ist.

## Revendications

1. Dispositif de combiné (20), **caractérisé en ce qu'**il comprend : une première interface (12), une seconde interface (14), un commutateur (16) et une unité d'isolation (18), l'unité d'isolation (18) comprenant un premier corps d'isolation (182) et un second corps d'isolation (184) relié au premier corps d'isolation (182) en parallèle, et la première interface (12) étant reliée à la seconde interface (14) par le biais de l'unité d'isolation (18), dans lequel
la première interface (12) est configurée pour être reliée à un réseau terrestre du combiné ;
la seconde interface (14) est configurée pour être reliée à une ligne terrestre d'un terminal mobile dans lequel le dispositif de combiné se trouve ;
le premier corps d'isolation (182) est configuré pour empêcher un signal d'une modulation de fréquence,FM, de se connecter au réseau terrestre ;
le second corps d'isolation (184) est configuré pour empêcher un signal à une fréquence de communication cellulaire de se connecter au réseau terrestre ; et
le commutateur (16) est configuré pour choisir de conduire le premier corps d'isolation (182), la première interface (12) et la seconde interface (14), ou pour choisir de conduire le second corps d'isolation (184), la première interface (12) et la seconde interface (14).

2. Dispositif de combiné selon la revendication 1, **caractérisé en ce que** le premier corps d'isolation (182) et le second corps d'isolation (184) comprennent une bille magnétique.

3. Dispositif de combiné selon la revendication 1, **caractérisé en ce que** le commutateur (16) comprend un commutateur analogique à haute fréquence ou un commutateur à semi-conducteur à oxyde de métal complémentaire, CMOS.

4. Dispositif de combiné selon l'une quelconque des revendications 1 à 3, **caractérisé en ce qu'**une impédance du premier corps d'isolation (182) sur la bande FM est supérieure ou égale à un premier seuil, le premier seuil étant utilisé pour garantir la capacité à empêcher le signal de la bande FM de se connecter au réseau terrestre ; et une impédance du second corps d'isolation (184) sur la plage de fréquences de communication cellulaires est supérieure ou égale à un second seuil, le second seuil étant utilisé pour garantir la capacité à empêcher le signal de la bande de fréquences de communication cellulaires de se connecter au réseau terrestre.

5. Dispositif de combiné selon la revendication 4, **caractérisé en ce que** la bande FM est de 100 MHz, et le premier seuil est de 600 ohms ; et la plage de fréquences de communication cellulaires est de 1 GHz ou 2 GHz, et le second seuil est de 600 ohms.

6. Combiné (2), **caractérisé en ce qu'**il comprend le dispositif de combiné (20) selon l'une quelconque des revendications 1 à 5.

7. Procédé de traitement d'un signal par le dispositif de combiné (20) selon l'une quelconque des revendications 1 à 5, qui est appliqué à un terminal mobile, **caractérisé en ce qu'**il comprend :
la réception (302) d'un message de sélection de fonction, le message de sélection de fonction étant utilisé pour indiquer la sélection d'une fonction FM ou d'une fonction de traitement de signal sur une plage de fréquences de communication cellulaires ; et
l'envoi (304) d'une commande de contrôle, la commande de contrôle étant utilisée pour régler un commutateur afin de sélectionner le premier corps d'isolation de façon à empêcher un signal de la bande FM de se connecter au réseau terrestre, ou de sélectionner le second corps d'isolation de façon à empêcher un signal de la bande de fréquences de communication cellulaires de se connecter au réseau terrestre.

8. Procédé selon la revendication 7, **caractérisé en ce que**
le réglage (302) du commutateur afin de sélectionner le premier corps d'isolation de façon à empêcher le signal de la bande FM de se connecter au réseau terrestre comprend : le réglage du commutateur afin de conduire le premier corps d'isolation, la première interface et la seconde interface ; et
le réglage (302) du commutateur afin de sélectionner le second corps d'isolation de façon à empêcher le signal de la bande de fréquences de communication cellulaires de se connecter au réseau terrestre comprend : le réglage du commutateur afin de conduire le second corps d'isolation, la première interface et la seconde interface.

9. Procédé selon la revendication 7 ou 8, **caractérisé en ce qu'**une impédance du premier corps d'isolation sur la bande FM est supérieure ou égale à un premier seuil, le premier seuil étant utilisé pour garantir la capacité à empêcher le signal de la bande FM de se connecter au réseau terrestre ; et une impédance du second corps d'isolation sur la plage de fréquences de communication cellulaires est supérieure ou égale à un second seuil, le second seuil étant utilisé pour garantir la capacité à empêcher le signal de la bande de fréquences de communication cellulaires de se connecter au réseau terrestre.

10. Procédé selon la revendication 9, **caractérisé en ce que** la bande FM est de 100 MHz ; le premier seuil est de 600 ohms ; la plage de fréquences de communication cellulaires est de 1 GHz ou 2 GHz ; et le second seuil est de 600 ohms.
